# EUROPEAN PATENT APPLICATION

(11) **EP 2 276 102 A1**
(43) Date of publication of application: **19.01.2011**
(21) Application number: 09738626.2
(22) Date of filing: 27.04.2009
(51) Int. Cl.: H01M 14/00, H01L 31/04

(54) **MANUFACTURING METHOD FOR PHOTOELECTRIC TRANSDUCER, PHOTOELECTRIC TRANSDUCER MANUFACTURED THEREBY, MANUFACTURING METHOD FOR PHOTOELECTRIC TRANSDUCER MODULE, AND PHOTOELECTRIC TRANSDUCER MODULE MANUFACTURED THEREBY**

(30) Priority: 28.04.2008 JP 2008116965; 24.02.2009 JP 2009040392
(71) Applicant: Fujikura, Ltd., Tokyo 135-0042 (JP)
(72) Inventor: USUI, Hiroki, Sakura-shi Chiba 285-8550 (JP)
(74) Representative: HOFFMANN EITLE
(86) International application number: PCT/JP2009/001909
(87) International publication number: WO 2009/133689

(57) **Abstract**

[Problems] Provided are a photoelectric conversion element manufacturing method and the like which is capable of easily manufacturing a photoelectric conversion element including a terminal that is strongly bonded to an electrode made of titanium.

[Means to solve the Problems] A method of manufacturing a photoelectric conversion element 100 includes: a semiconductor forming step of forming a porous oxide semiconductor layer 3 on a surface of a catalytic layer 6 of a first electrode 10 including a metal plate 4 made of titanium or an alloy including titanium and the catalytic layer 6, or a surface of a transparent conductor 1 of a second electrode 20 including the transparent conductor 1; a dye supporting step of supporting a photo-sensitized dye on the porous oxide semiconductor layer 3; a sealing step of surrounding and sealing the porous oxide semiconductor layer 3 and an electrolyte 5 between the first electrode 10 and the second electrode 20 with a sealing material 14; and a terminal forming step of forming a terminal 7 on the metal plate 4. In the terminal forming step, the terminal 7 is formed by pressing a metal member including at least one of copper and nickel against the metal plate 4 and applying an ultrasonic wave to the metal member.

## Description

### TECHNICAL FIELD

The present invention relates to a method of manufacturing a photoelectric conversion element, a photoelectric conversion element manufactured by the method, a method of manufacturing a photoelectric conversion element module, and a photoelectric conversion element module manufactured by the method.

### BACKGROUND ART

A dye-sensitized solar cell is developed by Gratzel, et al.,(Swiss), has advantages of high photoelectric conversion efficiency and low manufacturing cost, and attracts attention as a new type solar cell.

The dye-sensitized solar cell has a structure in which a working electrode on which a porous oxide semiconductor layer having a photo-sensitized dye supported thereon and a counter electrode that is provided so as to face the working electrode are provided on a transparent base having a transparent semiconductor film provided thereon, in which an electrolyte containing redox pairs is filled between the working electrode and the counter electrode and surrounded by a sealing member.

In this type of dye-sensitized solar cell, when the photo-sensitized dye absorbs incident light, such as sun light or the like, electrons are generated and injected into oxide semiconductor fine particles, and electromotive force is generated between the working electrode and the counter electrode. In this way, the dye-sensitized solar cell serves as a photoelectric conversion element that converts light energy into power.

In general, as the electrolyte, an electrolytic solution obtained by dissolving redox pairs, such as I⁻/I³⁻, in an organic solvent, such as acetonitrile, is used. In addition, for example, the following structures have been known: a structure using a non-volatile ionic liquid; a structure that gelates a liquid electrolyte with an appropriate gelling agent to pseudo-solidify the liquid electrolyte; and a structure using a solid-state semiconductor, such as a p-type semiconductor.

The counter electrode needs to be made of a material having resistance to corrosion that is caused by a chemical reaction with the electrolyte. As the material, a titanium substrate on which a platinum film is formed or a glass electrode substrate on which a platinum film is formed may be used.

However, in the glass electrode substrate having a conductive layer made of platinum formed thereon, the thickness of glass needs to be equal to or more than a predetermined value in order to ensure the strength of the glass. As a result, the thickness of the photoelectric conversion element increases. Therefore, there is a demand for a counter electrode including a titanium substrate. However, it is difficult to connect, for example, a lead wire to the titanium substrate since an oxide film is formed on the surface of the titanium substrate.

Therefore, it is proposed that a film made of dissimilar metal (for example, Cu) facilitating soldering is formed on the surface of an electrode including the titanium substrate by a sputtering method or the like (see Patent Document 1).

### Background Art Document

### Patent Document

Patent Document 1: Japanese Patent Application Laid-Open (JP-A) No. 2007-280849

### DISCLOSURE OF INVENTION

### Problems to be solved by the Invention

However, in the photoelectric conversion element disclosed in Patent Document 1, since the film made of the dissimilar metal is formed by the sputtering method or the like, it is necessary to use a vacuum apparatus or the like. Therefore, costs increase, and it is difficult to form the film. Therefore, there is a problem that it is difficult to easily manufacture a photoelectric conversion element in which, for example, the lead wire or the like can be connected to the counter electrode using the titanium substrate. In addition, there is room to further improve the bonding strength between the film and the titanium substrate.

The present invention has been made considering the above-mentioned circumstances and an object of the present invention is to provide a photoelectric conversion element manufacturing method of easily manufacturing a photoelectric conversion element including a terminal that is strongly bonded to an electrode made of titanium, a photoelectric conversion element manufactured by the method, a method of manufacturing a photoelectric conversion element module, and a photoelectric conversion element module manufactured by the method.

### Means for solving the Problem

A method of manufacturing a photoelectric conversion element according to the present invention is **characterized in that** the method includes: a semiconductor forming step of forming a porous oxide semiconductor layer on a surface of a catalytic layer of a first electrode including a metal plate made of titanium or an alloy including titanium and the catalytic layer, or a surface of a transparent conductor of a second electrode including the transparent conductor; a dye supporting step of supporting a photo-sensitized dye on the porous oxide semiconductor layer; a sealing step of surrounding and sealing the porous oxide semiconductor layer and an electrolyte between the first electrode and the second electrode with a sealing material; and a terminal forming step of forming a terminal on the metal plate in a surface other than the surface surrounded by the outer circumference of the sealing material in the first electrode, wherein in the terminal forming step, the terminal is formed by pressing a metal member including at least one of copper and nickel against the metal plate and applying an ultrasonic wave to the metal member.

According to the method of manufacturing the photoelectric conversion element, the porous oxide semiconductor layer is formed on the catalytic layer of the first electrode or the transparent conductor of the second electrode, and the photo-sensitized dye is supported on the porous oxide semiconductor layer. That is, in the first electrode and the second electrode, the electrode in which the porous oxide semiconductor layer is formed becomes an electrode in a working electrode and the electrode in which the porous oxide semiconductor layer is formed becomes an electrode in a counter electrode. The electrolyte is surrounded and sealed between the first electrode and the second electrode by the sealing material. The first electrode includes the metal plate made of titanium or an alloy including titanium, and the metal plate has corrosion resistance to the electrolyte. The terminal is formed on the metal plate in a surface other than the surface surrounded by the outer circumference of the sealing material in the first electrode. Here, the terminal is a metal member including at least one of copper and nickel and is formed by pressing the metal member against the counter electrode while being vibrated by the ultrasonic wave. Therefore, at least a portion of an oxide film on the surface of the metal plate of the first electrode including the metal plate made of titanium or an alloy including titanium is damaged, and the counter electrode 12 and the metal member rub each other due to ultrasonic vibration and are bonded to each other in a solid phase state by plastic deformation due to pressure. In this way, the metal member is strongly bonded to the metal plate. Therefore, it is possible to strongly bond the metal member to the metal plate made of titanium or an alloy including titanium and easily form the terminal without using equipment, such as a vacuum apparatus or the like.

In the above-mentioned method of manufacturing a photoelectric conversion element, the porous oxide semiconductor layer may be formed on the transparent conductor.

Further, in the above-mentioned method of manufacturing a photoelectric conversion element, it is preferable that the first electrode include an extending portion that extends to the outside of the region surrounded by the outer circumference of the sealing material, when viewing the first electrode from a direction vertical to the surface of the first electrode, and the terminal be formed in the extending portion.

According to the method of manufacturing the photoelectric conversion element, the distance between the terminal and the photo-sensitized dye or the electrolyte is longer than that when the terminal is formed in the region surrounded by the sealing material on the surface of the first electrode opposite to the second electrode, when viewing the first electrode from the direction vertical to the surface of the first electrode. Therefore, in the terminal forming step, when heat is generated or heat is applied, it is possible to prevent the heat from being transferred to the photo-sensitized dye or the electrolyte through the first electrode. As a result, it is possible to prevent the deterioration of the photo-sensitized dye or the electrolyte due to heat in the terminal forming step.

Alternatively, in the above-mentioned method of manufacturing a photoelectric conversion element, it is preferable that a power collection line made of a metal material be provided on the surface of the second electrode facing the first electrode so as to extend from the region surrounded by the sealing material to the outside of the outer circumference of the sealing material, and the terminal may be formed in the region surrounded by the sealing material on the surface of the first electrode opposite to the second electrode at a position overlapping the power collection line, when viewing the first electrode from the direction vertical to the surface of the first electrode.

According to the method of manufacturing the photoelectric conversion element having the abode-mentioned structure, in the terminal forming step, when heat is generated or heat is applied, heat transferred to the electrolyte through the first electrode is transferred to the power collection line. The power collection line has excellent thermal conductivity since it is made of a metal material. Since the power collection line is provided so as to extend from the region surrounded by the sealing material to the outside of the outer circumference of the sealing material, heat transferred to the power collection line is transferred to the outside of the outer circumference of the sealing material and is then emitted to the outside. Therefore, it is possible to prevent heat transferred to the photo-sensitized dye or the electrolyte through the first electrode from remaining in the photo-sensitized dye or the electrolyte. As a result, it is possible to prevent the deterioration of the photo-sensitized dye or the electrolyte due to heat in the terminal forming step.

Alternatively, in the above-mentioned method of manufacturing a photoelectric conversion element, it is preferable that a power collection line made of a metal material be provided on the surface of the second electrode facing the first electrode so as to extend from a region overlapping the sealing material to the outside of the outer circumference of the sealing material, and the terminal be formed in the region overlapping the sealing material on the surface of the first electrode opposite to the second electrode at a position overlapping the power collection line, when viewing the first electrode from the direction vertical to the surface of the first electrode.

According to the method of manufacturing the photoelectric conversion element having the above-mentioned structure, in the terminal forming step, when heat is generated or heat is applied, heat transferred to the sealing material through the first electrode is transferred to the power collection line. The power collection line has excellent thermal conductivity since it is made of a metal material. Since the power collection line is provided so as to extend from the region overlapping the sealing material to the outside of the outer circumference of the sealing material, heat transferred to the power collection line is transferred to the outside of the outer circumference of the sealing material and is then emitted to the outside. Therefore, it is possible to prevent heat transferred to the sealing material through the first electrode from remaining in the sealing material or prevent heat transferred to the photo-sensitized dye or the electrolyte through the sealing member from remaining in the photo-sensitized dye or the electrolyte. As a result, it is possible to prevent the deterioration of the sealing member, the photo-sensitized dye, or the electrolyte due to heat in the terminal forming step.

Moreover, a method of manufacturing a photoelectric conversion element according to the present invention is **characterized in that** the method includes: a terminal forming step of forming a terminal on a surface of a metal plate of a first electrode including the metal plate made of titanium or an alloy including titanium and a catalytic layer; a semiconductor forming step of forming a porous oxide semiconductor layer on a surface of a transparent conductor of a second electrode including the transparent conductor; a dye supporting step of supporting a photo-sensitized dye on the porous oxide semiconductor layer; and a sealing step of making the first electrode and the second electrode face and surrounding and sealing the porous oxide semiconductor layer and an electrolyte between the first electrode and the second electrode with a sealing material such that the terminal is not surrounded by the sealing material, wherein in the terminal forming step, the terminal is formed by pressing a metal member including at least one of copper and nickel against the metal plate and applying an ultrasonic wave to the metal member.

According to the method of manufacturing the photoelectric conversion element, the terminal is formed on the metal plate on the first electrode, the porous oxide semiconductor layer is formed on the second electrode, and the photo-sensitized dye is supported on the porous oxide semiconductor layer. As such, the terminal forming step is performed before the sealing step, and the terminal and the porous oxide semiconductor layer are formed on each of different electrodes, respectively. Therefore, even when heat is generated or heat is applied in the terminal forming step, heat is not transferred to the second electrode. As a result, it is possible to prevent the deterioration of the photo-sensitized dye due to heat in the terminal forming step. In addition, even when heat is generated or heat is applied in the terminal forming step, heat is not transferred to the electrolyte through the first electrode. Therefore, it is possible to prevent the deterioration of the electrolyte due to heat in the terminal forming step.

Alternatively, a method of manufacturing a photoelectric conversion element according to the present invention is **characterized in that** the method includes: a semiconductor forming step of forming a porous oxide semiconductor layer on a surface of a catalytic layer of a first electrode including a metal plate made of titanium or an alloy including titanium and the catalytic layer; a dye supporting step of supporting a photo-sensitized dye on the porous oxide semiconductor layer; a terminal forming step of forming a terminal on the metal plate in a region in which the porous oxide semiconductor layer is not formed on the surface of the first electrode; and a sealing step of making a second electrode having a transparent conductor and the first electrode face and surrounding and sealing the porous oxide semiconductor layer and an electrolyte between the first electrode and the second electrode with a sealing material such that the terminal is not surrounded by the sealing material, wherein in the terminal forming step, the terminal is formed by pressing a metal member including at least one of copper and nickel against the metal plate and applying an ultrasonic wave to the metal member.

According to the method of manufacturing the photoelectric conversion element, the terminal forming step is performed before the sealing step terminal forming step. Therefore, even when heat is generated or heat is applied in the terminal forming step, heat is not transferred to the electrolyte through the first electrode. As a result, it is possible to prevent the deterioration of the electrolyte due to heat.

Further, in the above-mentioned method of manufacturing a photoelectric conversion element, it is preferable that the terminal forming step be performed before the dye supporting step.

According to the method of manufacturing the photoelectric conversion element, the terminal forming step is performed before the dye supporting step. Therefore, even when heat is generated or heat is applied in the terminal forming step, heat is not transferred to the photo-sensitized dye. As a result, it is possible to prevent the deterioration of the photo-sensitized dye due to heat.

Moreover, in the above-mentioned method of manufacturing a photoelectric conversion element, it is preferable that in the terminal forming step, the terminal be formed while the metal member is heated.

According to the method of manufacturing the photoelectric conversion element, it is possible to more strongly bond the metal member to the metal plate.

A photoelectric conversion element according to the present invention is **characterized in that** it is manufactured by the above-mentioned method of manufacturing a photoelectric conversion element.

According to the photoelectric conversion element, during a manufacturing process, at least a portion of the oxide film on the surface of the metal plate of the first electrode including the metal plate made of titanium or an alloy including titanium is damaged, and the metal member is strongly bonded to the metal plate. Therefore, it is possible to strongly bond the photoelectric conversion element and a lead wire or the like when the lead wire is connected to the terminal.

A method of manufacturing a photoelectric conversion element module according to the present invention is **characterized in that** the method includes: a photoelectric conversion element preparing step of preparing a plurality of photoelectric conversion elements manufactured by the above-mentioned method of manufacturing a photoelectric conversion element; and a connection step of electrically connecting the terminal formed on the first electrode of at least one of the photoelectric conversion elements and the second electrode of at least another photoelectric conversion element with a conductive member.

According to the method of manufacturing the photoelectric conversion element module, it is possible to easily and strongly bond the metal member to the first electrode made of titanium in the photoelectric conversion element forming the photoelectric conversion element module. Therefore, it is possible to manufacture a photoelectric conversion module capable of strongly connecting the photoelectric conversion elements using the conductive member.

Further, in the above-mentioned method of manufacturing a photoelectric conversion element module, in the photoelectric conversion element, the terminal may be formed outside a region surrounded by the outer circumference of the sealing material on the surface of the second electrode facing the first electrode, and the terminal formed on the first electrode of at least one of the photoelectric conversion elements and the terminal formed on the second electrode of at least another photoelectric conversion element may be connected to each other by the conductive member.

A photoelectric conversion element module according to the present invention is **characterized in that** it is manufactured by the above-mentioned method of manufacturing a photoelectric conversion element module.

According to the photoelectric conversion element module, it is possible to strongly connect the photoelectric conversion elements. Therefore, it is possible to prevent the disconnection between the photoelectric conversion elements due to external force or the like.

### Effects of the Invention

According to the present invention, provided are a photoelectric conversion element manufacturing method of easily manufacturing a photoelectric conversion element including a terminal that is strongly bonded to an electrode made using titanium, a photoelectric conversion element manufactured by the method, a method of manufacturing a photoelectric conversion element module, and a photoelectric conversion element module manufactured by the method.

### BRIEF DESCRIPTION OF DRAWINGS

Fig. 1 is a cross-sectional view illustrating a photoelectric conversion element according to a first embodiment of the invention.
Fig. 2 is a cross-sectional view illustrating a photoelectric conversion element according to a second embodiment of the invention.
Fig. 3 is a cross-sectional view illustrating a photoelectric conversion element according to a third embodiment of the invention.
Fig. 4 is a cross-sectional view illustrating a photoelectric conversion element according to a fourth embodiment of the invention.
Fig. 5 is a cross-sectional view illustrating a photoelectric conversion element module according to a fifth embodiment of the invention.
Fig. 6 is a cross-sectional view illustrating a photoelectric conversion element module according to a sixth embodiment of the invention.
Fig. 7 is a cross-sectional view illustrating a modification of the photoelectric conversion element shown in Fig. 1.

### BEST MODE FOR CARRYING OUT THE INVENTION

Hereinafter, preferred embodiments of a method of manufacturing a photoelectric conversion element, a photoelectric conversion element manufactured by the method, a method of manufacturing a photoelectric conversion element module, and a photoelectric conversion element module manufactured by the method according to the present invention will be described in detail with reference to the accompanying drawings.

### (First embodiment)

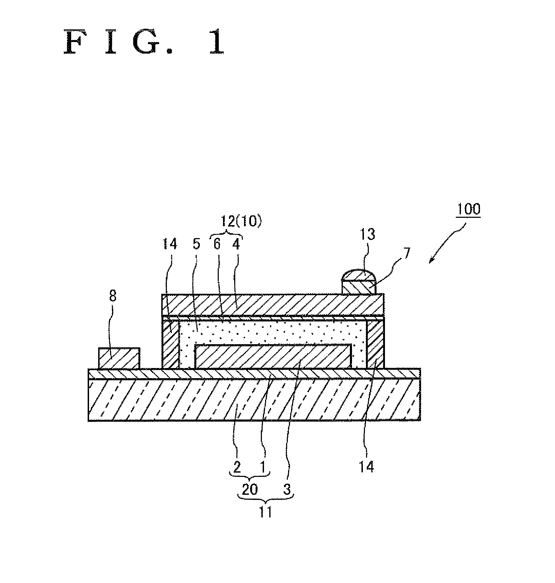

Fig. 1 is a schematic cross-sectional view illustrating a photoelectric conversion element according to a first embodiment of the invention.

As shown in Fig. 1, a photoelectric conversion element 100 includes as main structural elements a working electrode 11, a counter electrode 12 that is provided so as to face the working electrode 11, an electrolyte 5 that is disposed between the working electrode 11 and the counter electrode 12, a sealing material 14 that surrounds the electrolyte 5, and a terminal 7 that is formed on one surface of the counter electrode 12 opposite to the working electrode 11.

### (Working electrode)

The working electrode 11 includes a second electrode 20 having a transparent base 2 and a transparent conductor 1 provided on one surface of the transparent base 2, and a porous oxide semiconductor layer 3 that is provided on the transparent conductor 1 and has a photo-sensitized dye supported thereon.

The transparent base 2 is formed of a substrate made of a translucent material. Examples of the translucent material include glass, polyethylene terephthalate (PET), polycarbonate (PC), polyether sulfone (PES), and polyethylene naphthalate (PEN). The translucent material may be any material generally used to form the transparent base of the photoelectric conversion element. The material forming the transparent base 2 is appropriately selected from the materials considering, for example, electrolyte resistance. It is preferable that the transmittance of the transparent base 2 be as high as possible. It is more preferable that the transmittance of the transparent base be equal to or more than 90%.

The transparent conductor 1 is a transparent conductive thin film that is partially or wholly formed on one surface of the transparent base 2. In order to prevent the transparency of the working electrode 11 from being significantly damaged, it is preferable that the transparent conductor 1 be a thin film made of a conductive metal oxide. Examples of the conductive metal oxide include an indium tin oxide (ITO), a fluorine-added tin oxide (FTO), and a tin oxide (SnO₂). The transparent conductor 1 may be a single layer or a laminate of a plurality of layers made of different conductive metal oxides. When the transparent conductor 1 is a single layer, it is preferable that the transparent conductor 1 be made of ITO or FTO in terms of ease of the formation of a film and a low manufacturing cost. It is more preferable that the transparent conductor 1 be made of FTO in terms of high heat resistance and high chemical resistance.

It is preferable that the transparent conductor 1 be a laminate of a plurality of layers since it is possible to reflect the characteristics of each layer. It is preferable that the transparent conductor 1 be a laminated film obtained by laminating an FTO film on an ITO film. In this case, it is possible to achieve the transparent conductor 1 with high conductivity, high heat resistance, and high chemical resistance, and it is possible to form a transparent conductive substrate that absorbs a small amount of light in the visible range and has high conductivity. In addition, the thickness of the transparent conductor 1 may be in the range of, for example, 0.01 µm to 2 µm.

An oxide semiconductor forming the porous oxide semiconductor layer 3 is not particularly limited. Any material generally used to form the porous oxide semiconductor layer for a photoelectric conversion element may be used as the oxide semiconductor. Examples of the oxide semiconductor include a titanium oxide (TiO₂), a tin oxide (SnO₂), a tungsten oxide (WO₃), a zinc oxide (ZnO), a niobium oxide (Nb₂O₅), strontium titanate (SrTiO₃), an indium oxide (In₃O₃), a zirconium oxide (ZrO₂), a thallium oxide (Ta₂O₅), a lanthanum oxide (La₂O₃), an yttrium oxide (Y₂O₃), a holmium oxide (HO₂O₃), a bismuth oxide (Bi₂O₃)' a cerium oxide (CeO₂), and an aluminum oxide (Al₂O₃). The porous oxide semiconductor layer 3 may be made of an oxide semiconductor including two or more kinds of elements selected from them.

It is preferable that the average diameter of particles of the oxide semiconductor be in the range of 1 nm to 1000 nm since the surface area of the oxide semiconductor covered with dye increases, that is, photoelectric conversion is performed in the wide area,therefore, it is possible to generate a large number of electrons. It is preferable that the porous oxide semiconductor layer 3 be formed by laminating oxide semiconductor particles with different particle size distributions. In this case, it is possible to repeatedly reflect light in the semiconductor layer and reduce the amount of incident light emitted to the outside of the porous oxide semiconductor layer 3. Therefore, it is possible to effectively convert light into electrons. The thickness of the porous oxide semiconductor layer 3 may be in the range of, for example, 0.5 µm to 50 µm. The porous oxide semiconductor layer 3 may be a laminate of a plurality of oxide semiconductors made of different materials.

As a method of forming the porous oxide semiconductor layer 3, for example, the following method may be used: a method of adding a desired additive to a dispersion liquid obtained by dispersing commercial oxide semiconductor particles in a desired dispersion medium, or a colloid solution produced by a sol-gel method, if necessary, applying the dispersion liquid using a known method, such as a screen printing method, an ink jet printing method, a roll coating method, a doctor blade method, or a spray applying method, and performing a heating process to form an air gap, thereby making a porous layer.

Examples of the photo-sensitized dye include ruthenium complexes including a bipyridine structure or a terpyridine structure or the like in a ligand, complexes including metal, such as porphyrin, phthalocyanine or the like, and organic dyes, such as eosin, rhodamine, and merocyanine. It is possible to select a material showing suitable behaviors for the purpose or the semiconductor used from the above-mentioned materials without particular limitation. Specifically, N3, N719, black dye or the like may be used.

### (Electrolyte)

The electrolyte 5 may be formed by impregnating an electrolytic solution into the porous oxide semiconductor layer 3 or by impregnating an electrolytic solution into the porous oxide semiconductor layer 3, gelating the electrolytic solution using an appropriate gelation agent (pseudo-solidifying), and integrated the electrolytic solution with the porous oxide semiconductor layer 3. Alternatively, a gel electrolyte including an ionic liquid, oxide semiconductor particles, or conductive particles may be used.

As the above-mentioned electrolytic solution, the solution obtained by dissolving an electrolyte component, such as iodine, iodide ions, or tertiary-butyl pyridine or the like in an organic solvent, such as ethylene carbonate or acetonitrile may be used. As the gelation agent used to gelate the electrolytic solution, polyvinylidene fluoride, polyethylene oxide derivative, amino acid derivative or the like may be used.

The above-mentioned ionic liquid is not particularly limited. Ambient temperature molten salt which is a liquid at a room temperature and is obtained by cationizing or anionizing a compound including quaternized nitrogen atoms is given as an example of the ionic liquid. Examples of the cation of the ambient temperature molten salt include a quaternized imidazolium derivative, a quaternized pyridinium derivative, a quaternized ammonium derivative and the like. Examples of the anion of the ambient temperature molten salt include BF₄⁻, PF₆⁻, F(HF)ₙ⁻, bis(trifluoro-methylsulfonyl)imide [N(CF₃SO₂)₂⁻], an iodide ion and the like. Salt including a quaternized imidazolium-based cation, an iodide ion, or a bis(trifluoro-methylsulfonyl)imide ion may be given as an example of the ionic liquid.

Although the kind of material or the size of the oxide semiconductor particle is not particularly limited, a material that is easily mixed with an electrolytic solution including an ionic liquid as a main component and gelates the electrolytic solution is used as the oxide semiconductor particles. In addition, the oxide semiconductor particle needs to have excellent chemical stability with respect to other coexisting components included in the electrolyte without reducing the conductivity of the electrolyte. In particular, it is preferable that the oxide semiconductor particle do not deteriorate due to an oxidation reaction even when the electrolyte includes redox pairs, such as iodine/iodide ion, bromine/bromide ion or the like.

It is preferable that the oxide semiconductor particle be made of one or a mixture of two or more kinds of materials selected from the group consisting of TiO₂, SnO₂, WO₃, ZnO, Nb₂O₅, In₂O₃, ZrO₂, Ta₂O₅, La₂O₃, SrTiO₃, Y₂O₃, HO₂O₃, Bi₂O₃, CeO₂, and Al₂O₃. Titanium dioxide fine particles (nano particles) is more preferable. It is more preferable that the average diameter of the titanium dioxide fine particles be in the range of about 2 nm to 1000 nm.

Particles with conductivity, such as conductive particles or semiconductor particles, are used as the conductive particles. The specific resistance of the conductive particle is preferably equal to or less than 1.0×10⁻² Ω·cm and more preferably equal to or less than 1.0×10⁻³ Ω·cm. Although the kind or size of the conductive particle is not particularly limited, a material that is easily mixed with an electrolytic solution including an ionic liquid as a main component and gelates the electrolytic solution is used as the oxide semiconductor particles. In addition, the conductive particle needs to have excellent chemical stability with respect to other coexisting components included in the electrolyte without easily reducing its conductivity in the electrolyte. In particular, it is preferable that the conductive particle does not deteriorate due to an oxidation reaction even when the electrolyte includes redox pairs, such as iodine/iodide ion, bromine/bromide ion or the like.

For example, the conductive particles are made of a material having carbon as a main component. Specifically, examples of the conductive particle include a particle, such as a carbon nanotube, a carbon fiber, and a carbon black and the like. A method of manufacturing these materials is known, and materials on the market may also be used.

### (Counter electrode)

The counter electrode 12 includes a first electrode 10. The first electrode includes a metal plate 4 made of titanium or an alloy including titanium and a catalytic layer 6. The catalytic layer 6 accelerating a reduction reaction is formed on one surface of the metal plate 4 facing the working electrode 11. The catalytic layer 6 is made of platinum, carbon or the like.

### (Sealing material)

The sealing material 14 connects the working electrode 11 and the counter electrode 12, and the electrolyte 5 between the working electrode 11 and the counter electrode 12 is surrounded and sealed by the sealing material 14. The sealing material 14 is made of, for example, an ionomer, an ethylene-vinyl acetate anhydride copolymer, an ethylene-methacrylate copolymer, an ethylene-vinyl alcohol copolymer, an ultraviolet-cured resin, or a vinyl alcohol polymer. In addition, the sealing material 14 may be made of only a resin, or a resin and an inorganic filler.

### (Terminal)

The terminal 7 is formed on the surface of the counter electrode 12 opposite to the working electrode 11, that is, the surface of the metal plate 4 of the first electrode 10. The terminal 7 is constituted by a metal member including at least one of copper and nickel.

Examples of the material constituting the metal member include an alloy containing other metal in copper or nickel in addition to a single element, such as copper or nickel.

In this embodiment, solder 13 for connecting, for example, a conductive wire and the terminal 7 is formed on the terminal 7. The solder 13 is not particularly limited, but a solder having a low melting point is preferred. It is preferable to use the solder with a low melting point of, for example, lower than 200°C. Examples of the solder include eutectic solder (for example, Sn-Pb or the like) and lead-free solder (for example, Sn-Ag, Sn-Cu, Sn-Ag-Cu, Sn-Zn, Sn-Zn-B or the like).

When the solder with a low melting point is used, it is possible to prevent an increase in the temperature of the photo-sensitized dye supported on the porous oxide semiconductor layer 3 or the electrolyte 5 during soldering between a conductive wire and the terminal 7 and thus prevent the deterioration of the photo-sensitized dye or the electrolyte 5.

A terminal 8 is formed in a region outside the outer circumference of the sealing material 14 on the surface of the second electrode 20 facing the first electrode. The examples of the material forming the terminal 8 include a metal, such as gold, silver, copper, platinum, aluminum or the like.

Next, a method of manufacturing the photoelectric conversion element 100 shown in Fig. 1 will be described.

First, the working electrode 11 and the counter electrode 12 are prepared (preparing step).

The working electrode 11 may be obtained by the following process. First, the transparent conductor 1 is formed on one surface of the transparent base 2, thereby forming the second electrode 20. Then, the porous oxide semiconductor layer 3 is formed on the transparent conductor 1 of the second electrode 20 (semiconductor forming step). Then, the photo-sensitized dye is supported (dye supporting step).

Examples of the method of forming the transparent conductor 1 on the transparent base 2 include by a thin film forming method, such as a sputtering method, a CVD (chemical vapor deposition) method, a spray pyrolysis deposition method (SPD method), or a vapor deposition method. Among them, the spray pyrolysis deposition method is preferable. When the transparent conductor 1 is formed by the spray pyrolysis deposition method, it is possible to easily control the Haze rate. In addition, the spray pyrolysis deposition method is preferable since it does not require a vacuum system and therefore, it is possible to simplify a manufacturing process and reduce costs.

A method of forming the porous oxide semiconductor layer 3 on the transparent conductor 1 mainly includes an applying process and a drying and burning process. The applying process includes applying, for example, the paste of TiO₂ colloid obtained by mixing TiO₂ powder, a surface active agent, and a thickening agent at a predetermined ratio onto the surface of the transparent conductor 1 which is processed to have hydrophilicity. At that time, as an applying method, for example, the following method is used: a method of moving a pressing unit (for example, a glass rod) on the transparent conductor 1 such that the applied colloid has a uniform thickness while pressing the colloid against the transparent conductor 1. The drying and burning process includes, for example, a method in which the applied colloid is left in an ambient atmosphere at a room temperature for about 30 minutes so as to be dried, and is then burned at a temperature of 450°C for about 60 minutes using an electric furnace.

In a method of supporting the photo-sensitized dye on the porous oxide semiconductor layer 3, first, a dye solution for supporting dye, for example, a solution obtained by adding a very small amount of N3 dye powder to a solvent including acetonitrile and t-butanol at a volume ratio of 1:1 is prepared.

Then, the second electrode 20 having the porous oxide semiconductor layer 3 formed thereon, which is subjected to a heat treatment at a temperature of about 120°C to 150°C in a separate electric furnace, is dipped in a solution including the photo-sensitized dye as a solvent in a schale-shaped container. Then, the second electrode 20 is maintained in a dark place for one day (about 20 hours). Then, the second electrode 20 having the porous oxide semiconductor layer 3 formed thereon is taken out from the solution including the photo-sensitized dye, and is cleaned with a mixed solution of acetonitrile and t-butanol. In this way, the working electrode 11 having the porous oxide semiconductor layer 3, which is a TiO₂ thin film having the photo-sensitized dye supported thereon, is obtained.

The terminal 8 on the working electrode 11 is formed by, for example, applying silver paste using a printing method and heating and burning it. It is preferable that the formation of the terminal 8 be performed before the dye supporting step.

In order to prepare the counter electrode 12, first, the metal plate 4 made of titanium or a titanium alloy is prepared. Then, the catalytic layer 6 made of, for example, platinum is formed on the surface of the prepared metal plate 4. The catalytic layer 6 is formed by, for example, a sputtering method. In this way, it is possible to obtain the first electrode 10 including the metal plate 4 and the catalytic layer 6. The first electrode 10 serves as the counter electrode 12.

Then, the electrolyte 5 is surrounded and sealed between the working electrode 11 and the counter electrode 12 by the sealing material 14 (sealing step).

First, a resin or a precursor thereof for forming the sealing material 14 is formed on the working electrode 11. In this case, the resin or the precursor thereof is formed so as to surround the porous oxide semiconductor layer 3 of the working electrode 11. When the resin is a thermoplastic resin, a molten resin is applied onto the working electrode 11 and is then naturally cooled at the room temperature, or a film-shaped resin contacts the working electrode 11, is heated and melted by an external heat source, and is naturally cooled at the room temperature, thereby obtaining the resin. For example, an ionomer or an ethylene-methacrylate copolymer is used as the thermoplastic resin. When the resin is an ultraviolet-curable resin, the ultraviolet-curable resin, which is the precursor of the resin, is applied onto the working electrode 11. When the resin is a water-soluble resin, an aqueous solution including the resin is applied onto the working electrode 11. For example, a vinyl alcohol polymer is used as the water-soluble resin.

Then, a resin or a precursor thereof for forming the sealing material 14 is formed on the counter electrode 12. The resin or the precursor thereof is formed on the counter electrode 12 at a position where it overlaps the resin or the precursor thereof formed on the working electrode 11 when the working electrode 11 faces the counter electrode 12. The resin or the precursor thereof may be formed on the counter electrode 12 by the same method as that forming the resin or the precursor thereof on the working electrode 11.

Then, an electrolyte is filled in the region surrounded by the resin or the precursor thereof on the working electrode 11.

Then, the working electrode 11 faces the counter electrode 12 to overlap the working electrode 11 with the resin on the counter electrode 12. Then, when the resin is a thermoplastic resin, the resin is heated and melted in a reduced-pressure environment to adhere the working electrode 11 and the counter electrode 12. In this way, the sealing material 14 is obtained. When the resin is an ultraviolet-curable resin, the working electrode 11 overlaps the ultraviolet-curable resin on the counter electrode 12 and the ultraviolet-curable resin is cured by ultraviolet rays, thereby forming the sealing material 14. When the resin is a water-soluble resin, a laminate is formed, is sufficiently dried at the room temperature so as not to stick to the finger, and is then dried in a low-humidity environment. In this way, the sealing material 14 is obtained.

Then, the terminal 7 is formed on the surface of the counter electrode 12 opposite to the working electrode 11, that is, on the metal plate 4 of the first electrode 10 (terminal forming step).

First, a metal member is arranged on the surface of the counter electrode 12 opposite to the working electrode 11 and the metal member is pressed against the counter electrode 12. The pressing operation includes a case in which the metal plate is pressed due to the weight of metal member. Ultrasonic vibration is applied to the metal member while the metal member is pressed. In this way, the counter electrode 12 and the metal member rub each other due to the ultrasonic vibration and at least a portion of an unnecessary oxide film is removed between the counter electrode 12 and the metal member. As a result, the counter electrode 12 and the metal member are bonded to each other in a solid phase state by plastic deformation due to pressure. In this way, the terminal 7 is bonded and formed to the surface of the counter electrode 12.

Here, it is preferable that the pressure between the counter electrode 12 and the metal member be more than 0 N/m² and equal to or less than 300 N/m² in terms of the close adhesion between the counter electrode 12 and the metal member. It is more preferable that the pressure be in the range of 1 N-m² to 100 N·m² in order to prevent the deformation of the counter electrode 12.

In addition, it is preferable that the ultrasonic wave applied to the metal member be applied in a direction parallel to the surface in which the counter electrode 12 and the metal member are bonded. It is preferable that the vibration frequency of the ultrasonic wave be in the range of 1 kHz to 200 kHz in terms of the good bonding between the counter electrode 12 and the metal member. It is more preferable that the vibration frequency be in the range of 10 kHz to 100 kHz in order to prevent the damage of the counter electrode 12. It is preferable that the vibration amplitude of the ultrasonic wave be in the range of 0.01 µm to 50 µm in terms of the bonding, and it is more preferable that the vibration amplitude be in the range of 0.1 µm to 10 µm in order to prevent the damage of the metal member and the metal plate 4.

When the metal member is bonded, it is preferable to heat the metal member in order to further improve bonding strength. In this case, it is preferable that the temperature of the metal member be in the range of, for example, 10°C to 500°C in order to easily bond the counter electrode 12 and the metal member. It is more preferable that the temperature of the metal member be in the range of 20°C to 200°C in order to maintain the dye and the electrolytic solution in a good state.

The solder 13 on the terminal 7 and the terminal 8 is formed by melting solder on the terminals 7 and 8 and pseudo-solidifying the solder.

In this way, the photoelectric conversion element 100 shown in Fig. 1 is obtained.

According to the method of manufacturing the photoelectric conversion element 100, the porous oxide semiconductor layer 3 is formed on the transparent conductor 1 of the second electrode including the transparent base 2 and the transparent conductor 1 and a photo-sensitized dye is supported thereon and then the working electrode 11 is obtained. In addition, the catalytic layer 6 is formed on the surface of the metal plate 4 made of titanium or a titanium alloy to form the first electrode 10, and the first electrode serves as the counter electrode 12. In this way, the working electrode 11 and the counter electrode 12 are prepared, and the electrolyte 5 between the working electrode 11 and the counter electrode 12 is surrounded and sealed by the sealing material 14. Since the counter electrode 12 includes the metal plate 4 made of titanium or an alloy including titanium and the catalytic layer 6, the counter electrode 12 has corrosion resistance to the electrolyte 5. Then, the terminal 7 is formed on the surface of the metal plate 4 of the counter electrode 12. The terminal 7 is made of a metal member including at least one of copper and nickel, and is formed by pressing the metal member against the counter electrode with the metal member vibrated by ultrasonic wave. Therefore, at least a portion of the oxide film on the surface of the metal plate 4 made of titanium or an alloy including titanium in the first electrode is damaged, and the counter electrode 12 and the metal member rub each other due to ultrasonic vibration and are bonded to each other in a solid phase state by plastic deformation due to pressure. In this way, the metal member is strongly bonded to the metal plate 4.

In this way, it is possible to easily manufacture the photoelectric conversion element 100 including the terminal 7 that is strongly fixed to the surface of the metal plate 4 of the counter electrode 12.

Therefore, in the photoelectric conversion element 100 manufactured by the above-mentioned manufacturing process, the first electrode 10 made of titanium and the terminal 7 formed on the first electrode 10 are strongly bonded to each other. For example, when a lead wire is connected to the terminal 7, it is possible to strongly connect the photoelectric conversion element 100 and the lead wire.

### (Second embodiment)

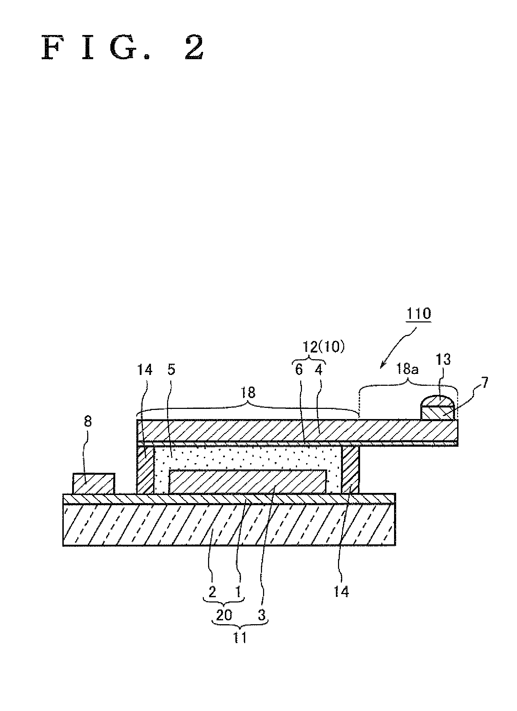

Next, second embodiment of a photoelectric conversion device according to the present invention will be described with reference to Fig. 2. In Fig. 2, the same components as those of the first embodiment or equivalents thereof are denoted by the same reference numerals and a description thereof will not be repeated.

Fig. 2 is a schematic cross-sectional view illustrating the photoelectric conversion device according to this embodiment. As shown in Fig. 2, in a photoelectric conversion element 110, the counter electrode 12 includes an extending portion 18a that extends from a region 18 surrounded by the outer circumference of the sealing material 14 to the outside, as viewing the metal plate 4 from a direction vertical to the surface of the metal plate 4 of the counter electrode 12. The terminal 7 is formed on the extending portion 18a. The photoelectric conversion element 110 is different from the photoelectric conversion element 100 according to the first embodiment in the above-mentioned points.

The photoelectric conversion element 110 is manufactured as follows.

First, in a preparing step, the counter electrode 12 having a region extending from the region to be surrounded by the outer circumference of the sealing material 14 is prepared. That is, the counter electrode 12 having a region to be the extending portion 18a is prepared. The other processes in the preparing step are the same as those in the first embodiment.

In a sealing step, sealing is performed by the sealing material 14 such that the extending portion 18a is ensured. The sealing method may be the same as that in the sealing step according to the first embodiment.

Then, in a terminal forming step, the terminal 7 is formed on the extending portion 18a. The terminal may be formed by the same method as those in the terminal forming step according to the first embodiment.

According to the method of manufacturing the photoelectric conversion element 110, when heat is generated or heat is applied in the terminal forming step, the distance between the terminal 7 and the electrolyte 5 is longer than that when the terminal 7 is connected to the region surrounded by the sealing material 14 when viewing the counter electrode 12 from the direction vertical to the surface of the metal plate 4 of the counter electrode 12. Therefore, it is possible to prevent heat from being transferred to the photo-sensitized dye or the electrolyte 5 through the counter electrode 12. Therefore, even when heat is generated or heat is applied tin the terminal forming step, it is possible to prevent the deterioration of the photo-sensitized dye or the electrolyte 5 due to heat.

### (Third embodiment)

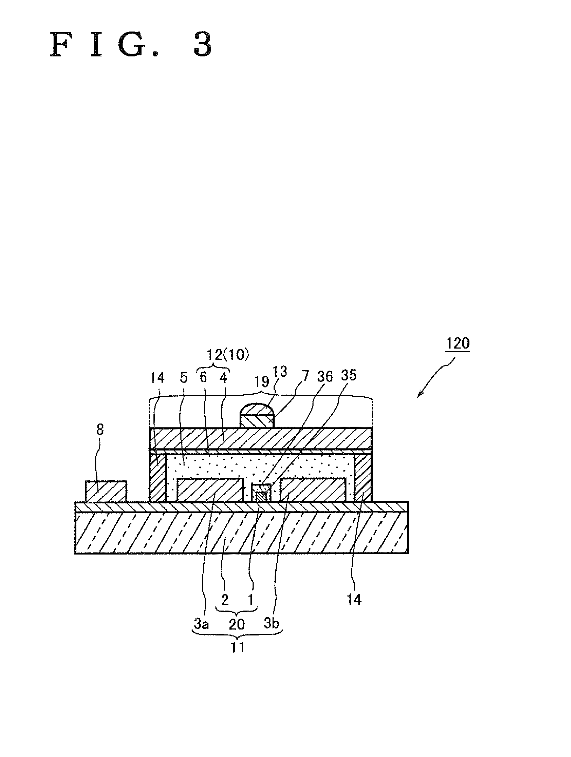

Next, a third embodiment of a photoelectric conversion device according to the present invention will be described with reference to Fig. 3. In Fig. 3, the same components as those of the first embodiment or equivalents thereof are denoted by the same reference numerals and a description thereof will not be repeated.

Fig. 3 is a schematic cross-sectional view illustrating the photoelectric conversion device according to this embodiment. As shown in Fig. 3, in a photoelectric conversion element 120, the working electrode 11 includes a plurality of porous oxide semiconductor layers 3a and 3b and a power collection line 35 made of a metal material is provided between the porous oxide semiconductor layers 3a and 3b on one surface of the working electrode 11 facing the counter electrode 12. The terminal 7 is formed so as to overlap the power collection line 35 in a region 19 of the metal plate 4 surrounded by the sealing material 14, when viewing the counter electrode 12 from the direction vertical to the surface of the metal plate 4 of the counter electrode 12. The photoelectric conversion element 120 is different from the photoelectric conversion element 100 according to the first embodiment in the above-mentioned points.

The power collection line 35 is provided so as to extend from the region 19 surrounded by the sealing material 14 to the outside of the outer circumference of the sealing material and is connected to the terminal 8.
In addition, the entire surface of the power collection line 35 is covered with a wiring line protective layer 36 such that the contact between the electrolyte 5 and the power collection line 35 is prevented. The wiring line protective layer 36 may or may not contact the transparent conductor 1 of the working electrode 11 as long as it covers the entire surface of the power collection line 35.

The power collection line 35 may be made of a material with a resistance less than that of the transparent conductor 1. For example, examples of the material include a metal, such as silver, copper, platinum, aluminum, titanium, nickel and the like.

The material constituting the wiring line protective layer 36 includes, for example, an inorganic insulating material such as a non-lead transparent glass frit with a low melting point.

It is preferable that the wiring line protective layer 36 be covered with a chemical-resistant resin (not shown), such as polyimide, a fluorine resin, an ionomer, an ethylene-vinyl acetate anhydride copolymer, an ethylene-methacrylate copolymer, an ethylene-vinyl alcohol copolymer, an ultraviolet-cured resin, or a vinyl alcohol polymer, in order to prevent the contact between the electrolyte 5 and the power collection line 35 for a longer time and prevent the generation of components dissolved from the wiring line protective layer 36 when the electrolyte 5 contacts the wiring line protective layer 36.

The photoelectric conversion element 120 is manufactured as follows.

First, when the working electrode 11 is prepared in a preparing step, the porous oxide semiconductor layers 3a and 3b are formed in a semiconductor forming step. In order to form the porous oxide semiconductor layers 3a and 3b, porous semiconductors may be provided at two points by the same method as that forming the porous oxide semiconductor layer 3 in the semiconductor forming step according to the first embodiment.

Then, the power collection line 35 and the wiring line protective layer 36 are formed. The power collection line 35 may be obtained by forming the porous oxide semiconductor layers 3a and 3b in the semiconductor forming step, applying metal particles for forming the power collection line between the porous oxide semiconductor layers 3a and 3b, and heating and burning the metal particles. It is preferable that the terminal 8 and the power collection line 35 be formed at the same time.

For example, the wiring line protective layer 36 may be formed by applying paste obtained by mixing an inorganic insulating material, such as the above-mentioned glass frit with a low melting point, with a thickening agent, a bonding agent, a dispersion agent, or a solvent, if necessary, so as to cover the entire surface of the power collection line 35 using a screen printing method or the like and heating and burning the paste.

When the wiring line protective layer 36 is covered with the above-mentioned chemical-resistant resin, the chemical-resistant resin may be obtained by applying a molten chemical-resistant resin onto the wiring line protective layer 36 and naturally cooling the molten chemical-resistant resin at the room temperature, or by contacting a film-shaped chemical-resistant resin with the wiring line protective layer 36, heating and melting the film-shaped chemical-resistant resin using an external heat source, and naturally cooling the film-shaped chemical-resistant resin at the room temperature. For example, an ionomer or an ethylene-methacrylate copolymer is used as the thermoplastic chemical-resistant resin. When the chemical-resistant resin is an ultraviolet-cured resin, the chemical-resistant resin may be obtained by applying the ultraviolet-curable resin, which is the precursor of the chemical-resistant resin, onto the wiring line protective layer 36 and curing the above-mentioned ultraviolet-curable resin with ultraviolet rays. When the chemical-resistant resin is a water-soluble resin, the chemical-resistant resin may be obtained by applying an aqueous solution including the chemical-resistant resin onto the wiring line protective layer 36.

The other processes in the preparing step are the same as those in the first embodiment.

Then, in a sealing step, sealing is performed by the same method as that in the sealing step according to the first embodiment.

Then, in a terminal forming step, the terminal 7 is formed. In the terminal forming step, the terminal 7 is formed so as to overlap the power collection line 35 in the region 19 of the metal plate 4 surrounded by the sealing material 14, when viewing the metal plate 4 from the direction vertical to the surface of the metal plate 4.
The terminal is formed by the same method as that in the terminal forming step according to the first embodiment.

According to the method of manufacturing the photoelectric conversion element 120, when heat is generated or heat is applied in the terminal forming step, the heat transferred to the electrolyte 5 through the counter electrode 12 is transferred to the power collection line 35. Since the power collection line 35 is made of a metal material, it has excellent thermal conductivity. Since the power collection line 35 is provided so as to extend from the region 19 surrounded by the sealing material 14 to the outside of the outer circumference of the sealing material 14, heat transferred to the power collection line 35 is transmitted to the outside of the outer circumference of the sealing material 14 and is then emitted to the outside. Therefore, it is possible to prevent the heat transferred to the electrolyte 5 through the counter electrode 12 from remaining in the electrolyte 5. As a result, in the terminal forming step, even when heat is generated or heat is applied, it is possible to prevent the deterioration of the photo-sensitized dye or the electrolyte due to heat.

### (Fourth embodiment)

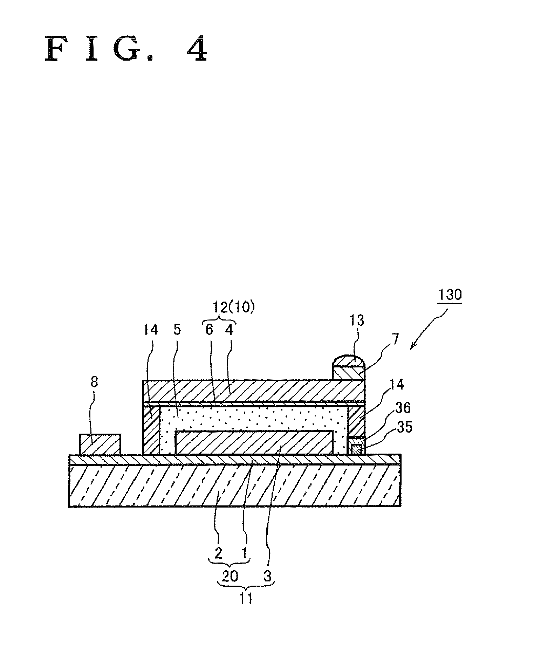

Next, a fourth embodiment of a photoelectric conversion device according to the present invention will be described with reference to Fig. 4. In Fig. 4, the same components as those of the first and third embodiments or equivalents thereof are denoted by the same reference numerals and a description thereof will not be repeated.

Fig. 4 is a schematic cross-sectional view illustrating the photoelectric conversion device according to this embodiment. As shown in Fig. 4, a photoelectric conversion element 130 is different from the photoelectric conversion elements according to the first and third embodiments in that the power collection line 35 is provided so as to extend from a position where it overlaps the sealing material 14 to the outside of the outer circumference of the sealing material 14 and is connected to the terminal 8, and the terminal 7 is formed at a position where the sealing material 14 and the power collection line 35 overlap each other, when viewing the metal plate 4 from the direction vertical to the surface of the metal plate 4.

The photoelectric conversion element 130 is manufactured as follows.

First, in a semiconductor forming step, the porous oxide semiconductor layer 3 is formed by the same method as that in the first embodiment, and the power collection line 35 is formed at a position overlapping the sealing material 14.

In order to form the power collection line 35 at a position overlapping the sealing material 14, first, the power collection line 35 is formed in a place in which the sealing material 14 will be formed around the porous oxide semiconductor layer 3. The method of forming the power collection line 35 is the same method as that forming the power collection line 35 in the third embodiment. Then, the wiring line protective layer 36 is formed. The wiring line protective layer 36 may be formed by the same method as that forming the wiring line protective layer in the third embodiment. It is preferable that the terminal 8 and the power collection line 35 be formed at the same time.

Then, in a sealing step, the working electrode 11 and the counter electrode 12 are overlapped and sealed such that the sealing material 14 and the power collection line 35 overlap each other. The sealing method may be performed by the same as that in the sealing step according to the first embodiment.

Then, in a terminal forming step, the terminal 7 is formed at a position where the sealing material 14 and the power collection line 35 overlap each other, when viewing the counter electrode 12 from the direction vertical to the surface of the metal plate 4. The terminal may be formed by the same method as that in the first embodiment.

According to the method of manufacturing the photoelectric conversion element, when heat is generated or heat is applied in the terminal forming step, heat transferred to the sealing material 14 through the counter electrode 12 is transferred to the power collection line 35. Since the power collection line 35 is provided so as to extend from the position where it overlaps the sealing material 14 to the outside of the outer circumference of the sealing material 14, heat transferred to the power collection line 35 is transmitted to the outside of the outer circumference of the sealing material 14 and is then emitted to the outside. Therefore, it is possible to prevent the heat transferred to the sealing material 14 through the counter electrode 12 from remaining in the sealing material 14 or prevent the heat transferred to the electrolyte 5 through the sealing material 14 from remaining in the electrolyte 5. As a result, in the terminal forming step, even when heat is generated or heat is applied, it is possible to prevent the deterioration of the sealing material 14, the photo-sensitized dye, or the electrolyte due to heat.

### (Fifth embodiment)

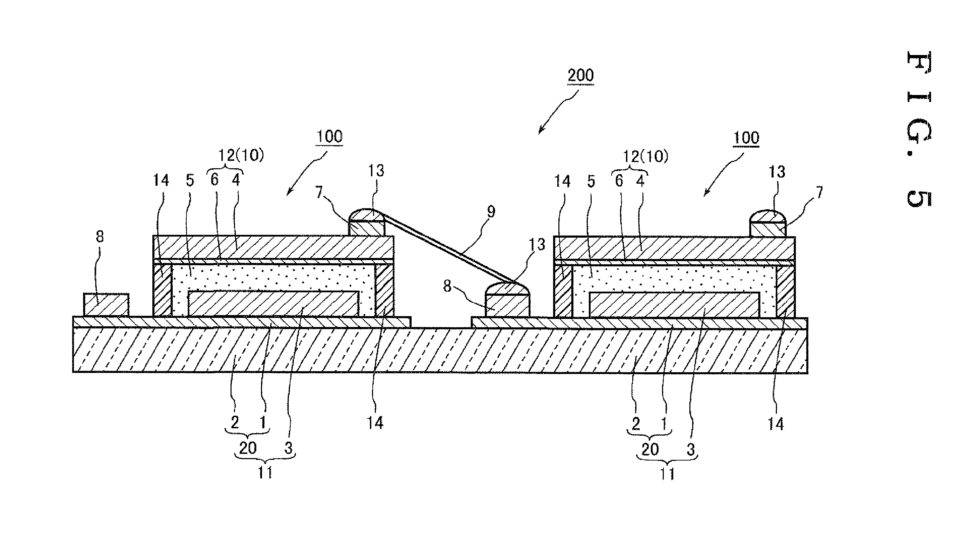

Next, a fifth embodiment of the present invention will be described with reference to Fig. 5. In Fig. 5, the same components as those of the first embodiment or equivalents thereof are denoted by the same reference numerals and a description thereof will not be repeated. This embodiment is a photoelectric conversion element module using a photoelectric conversion element having the same structure as the photoelectric conversion element 100 according to the first embodiment.

Fig. 5 is a schematic cross-sectional view illustrating the photoelectric conversion element module according to this embodiment.

As shown in Fig. 5, a photoelectric conversion element module 200 includes a pair of the photoelectric conversion elements 100. The two photoelectric conversion elements 100 and 100 share one transparent base 2.

One end of the conductive wire 9 is connected to the terminal 7 of one of the photoelectric conversion elements 100 by the solder 13. The other end of the conductive wire 9 is connected to the terminal 8 of the other photoelectric conversion element 100 by the solder 13. In this way, a pair of the photoelectric conversion elements 100 and 100 is connected in series to each other.

The conductive wire 9 is a wire made of a conductive material, such as metal or the like made of copper, solder or the like. For example, a lead wire or a solder ribbon wire may be used as the conductive wire 9.

The photoelectric conversion element module 200 may be manufactured as follows.

First, a pair of the photoelectric conversion elements 100 and 100 is prepared (photoelectric conversion element preparing step).

In order to prepare a pair of photoelectric conversion elements, first, in the preparing step of the manufacture of the photoelectric conversion element 100, a pair of the transparent conductors 1 is formed on the transparent base 2. The transparent conductors 1 may be formed by the same method as that forming the transparent conductor 1 in the first embodiment. Then, by the same method as that in the first embodiment, the porous oxide semiconductor layers 3 are formed on the transparent conductors 1 and a photo-sensitized dye is supported on the oxide semiconductor layers 3. Then, a plurality of counter electrodes is prepared by the same method as that in the first embodiment.

The terminals 8 are formed on the working electrodes 11 in each of the photoelectric conversion elements 100 and 100 by the same method as that in the first embodiment.

Then, the electrolyte 5 is sealed between each working electrode 11 and each counter electrode 12 by the same method as that in the sealing step according to the first embodiment.

Then, the terminals 7 are formed on the counter electrodes 12 by the same method as that in the terminal forming step according to the first embodiment.

Then, the terminal 7 on the counter electrode 12 of one of the photoelectric conversion elements 100 and the terminal 8 on the working electrode of the other photoelectric conversion element 100 are connected to each other by the conductive wire 9 (connection step).

The connection is performed by connecting one end of the conductive wire 9 to the terminal 7 on the counter electrode 12 of one of the photoelectric conversion elements 100 with the solder 13 and connecting the other end of the conductive wire 9 to the terminal 8 on the working electrode 11 of the other photoelectric conversion element 100 with the solder 13.

According to the method of manufacturing the photoelectric conversion element module according to this embodiment, after the photoelectric conversion elements 100 and 100 are manufactured, the conductive wire 9 may connect the terminal 7 formed on the surface of the counter electrode 12 opposite to the working electrode 11 and the terminal 8 formed on the transparent conductor 1 from the same direction using the solder 13. Therefore, it is possible to easily manufacture the photoelectric conversion element module 200. In addition, it is possible to easily change the connection of the conductive wire 9 after the photoelectric conversion element module 200 is manufactured.

In the photoelectric conversion element 100, the terminal 7 is strongly fixed to the metal plate 4 of the counter electrode 12. Therefore, it is possible to strongly connect the conductive wire 9 to the counter electrode 12 through the terminal 7. In the photoelectric conversion element module 200, the photoelectric conversion elements 100 are strongly connected to each other and it is possible to prevent the photoelectric conversion elements 100 from being disconnected from each other due to external force or the like.

In addition, in the photoelectric conversion element module 200, since the conductive wire 9 is connected by solder, it is possible to reduce resistance, as compared to the case in which the working electrode 11 of one of the photoelectric conversion elements 100 and the counter electrode 12 of the other photoelectric conversion element 100 are electrically connected to each other by, for example, silver paste or the like. Therefore, despite a titanium plate is used as the counter electrode 12, it is possible to reduce resistance and make durability better.

### (Sixth embodiment)

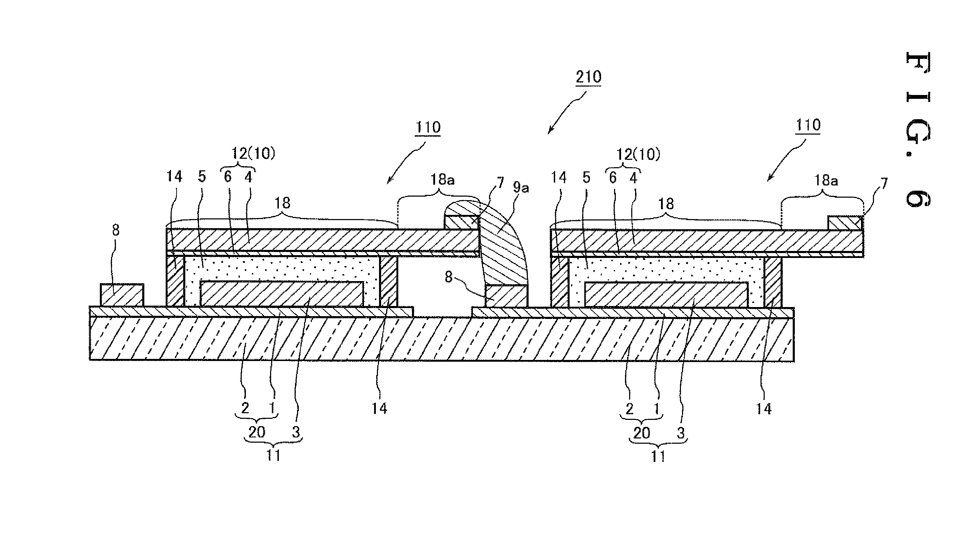

Next, a sixth embodiment of the present invention will be described with reference to Fig. 6. In Fig. 6, the same components as those of the second and fifth embodiments or equivalents thereof are denoted by the same reference numerals and a description thereof will not be repeated. This embodiment is a photoelectric conversion element module using a pair of photoelectric conversion elements having the same structure as the photoelectric conversion element 110 according to the second embodiment.

Fig. 6 is a schematic cross-sectional view illustrating the photoelectric conversion element module according to this embodiment.

As shown in Fig. 6, a photoelectric conversion element module 210 includes a pair of the photoelectric conversion elements 110 and 110. The two photoelectric conversion elements 110 and 110 share one transparent base 2.

A conductive adhesive 9a connects the terminal 7 on the counter electrode of one of the photoelectric conversion elements 110 and the terminal 8 on the working electrode of the other photoelectric conversion element 100. In this way, the two photoelectric conversion elements 110 are connected in series to each other.

Various kinds of metal paste, such as silver paste or the like, or carbon paste, may be used as the conductive adhesive 9a.

The photoelectric conversion element module 210 may be manufactured as follows.

First, a pair of the photoelectric conversion elements 110 and 110 is prepared (photoelectric conversion element preparing step).

In order to prepare a pair of the photoelectric conversion elements 110 and 110, in the preparing step of the manufacture of the photoelectric conversion element 110 according to the second embodiment, a pair of the transparent conductors 1 is formed on the transparent base 2. The transparent conductors 1 may be formed by the same method as that forming the transparent conductor 1 in the second embodiment. Then, by the same method as that in the second embodiment, the porous oxide semiconductor layers 3 are formed on the transparent conductors 1 and a photo-sensitized dye is supported on the oxide semiconductor layers 3. Then, a plurality of counter electrodes 12 is prepared by the same method as that in the second embodiment.

Then, the electrolyte 5 is sealed between each working electrode 11 and each counter electrode 12 by the same method as that in the sealing step according to the second embodiment.

Then, the terminal 7 is formed on the extending portion 18a of each counter electrode 12 by the same method as that in the terminal forming step according to the second embodiment. In addition, the terminal 8 is formed on the working electrode 11 of each of the photoelectric conversion elements 110 by the same method as that in the second embodiment.

Then, the terminal 7 on the counter electrode 12 of one of the photoelectric conversion elements 110 and the terminal 8 on the working electrode of the other photoelectric conversion element 110 are connected to each other by the conductive adhesive 9a (connection step).

According to the method of manufacturing the photoelectric conversion element module according to this embodiment, after the photoelectric conversion elements 110 and 110 are manufactured, it is possible to connect the terminal 7 formed on the surface of the counter electrode 12 opposite to the working electrode 11 and the terminal 8 formed on the transparent conductor 1 with the conductive adhesive 9a from the same direction. Therefore, it is possible to easily manufacture the photoelectric conversion element module 210. In addition, it is possible to easily change the connection between one of the photoelectric conversion elements 110 and the other photoelectric conversion element 110 after the photoelectric conversion element module is manufactured.

In the photoelectric conversion element 110, the terminal 7 is strongly fixed to the counter electrode 12. Therefore, it is possible to strongly connect the conductive adhesive 9a to the counter electrode 12 through the terminal 7.

The first to sixth embodiments of the present invention have been described above, but the invention is not limited thereto.

For example, in the first to sixth embodiments, the terminal forming step is performed after the sealing step, but the invention is not limited thereto. For example, the terminal forming step may be performed before the sealing step.

In this case, before the sealing step is performed, the terminal 7 is formed on one surface of the counter electrode 12. The terminal may be formed by the same method as that in the terminal forming step according to the first embodiment.

The terminal 7 is not sealed by the sealing material. Therefore, sealing may be performed with the working electrode 11 and the counter electrode 12 facing each other such that the surface of the counter electrode 12 on which the terminal 7 is not formed faces the working electrode 11. The sealing method may be the same as that in the sealing step according to the first embodiment.

As such, according to the structure in which the terminal forming step is performed before the sealing step, even when heat is applied in the terminal forming step, it is possible to prevent the deterioration of the photo-sensitized dye or the electrolyte 5 due to heat transferred to the photo-sensitized dye or the electrolyte 5 in the terminal forming step since the porous oxide semiconductor layer 3 and the electrolyte 5 have not been sealed yet.

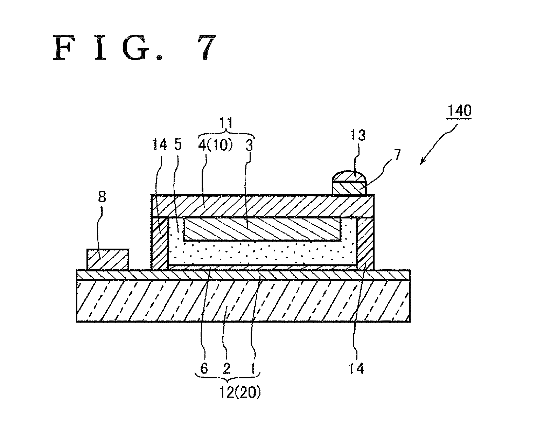

In the first to sixth embodiments, the porous oxide semiconductor layer 3 is formed on the second electrode 20. The working electrode 11 includes the second electrode 20 and the porous oxide semiconductor layer 3 having the photo-sensitized dye supported thereon, and the counter electrode 12 includes the first electrode 10. However, the present invention is not limited thereto. The porous oxide semiconductor layer 3 may be formed on the first electrode 10, the working electrode 11 may include the first electrode 10 and the porous oxide semiconductor layer 3 having the photo-sensitized dye supported thereon, and the counter electrode 12 may include the second electrode 20. Fig. 7 is a cross-sectional view illustrating a modification of the photoelectric conversion element 100 shown in Fig. 1. In this case, the first electrode 10 includes the metal plate 4, and the working electrode 11 includes the first electrode 10 and the porous oxide semiconductor layer 3 having the photo-sensitized dye supported thereon. The second electrode 20 includes the transparent base 2, the transparent conductor 1, and the catalytic layer 6 provided on the transparent conductor 1, and the counter electrode 12 includes the second electrode 20. The catalytic layer 6 is made of, for example, a platinum film or the like which is formed thinly to transmit light.

A photoelectric conversion element 140 is manufactured as follows. First, the first electrode 10 including the metal plate 4 is prepared. Then, the porous oxide semiconductor layer 3 is formed on the first electrode 10. The method of forming the porous oxide semiconductor layer 3 may be performed by the same method as that in the semiconductor forming step according to the first embodiment. Then, the photo-sensitized dye is supported on the porous oxide semiconductor layer 3. Supporting the photo-sensitized dye may be performed by the same method as that in the dye supporting step according to the first embodiment. In this way, the working electrode 11 in which the porous oxide semiconductor layer 3 is formed on the first electrode 10 is obtained.

Then, the counter electrode 12 is prepared. In order to prepare the counter electrode 12, the transparent conductor 1 is formed on the transparent base 2 and the catalytic layer 6 is formed on the transparent conductor 1, thereby forming the second electrode. The transparent conductor 1 may be formed by the same method as that forming the transparent conductor 1 on the transparent base 2 in the first embodiment. The catalytic layer may be formed on the transparent conductor 1 by the same method as that forming the catalytic layer on the metal plate 4 in the first embodiment. The second electrode obtained in this way serves as the counter electrode 12.

Then, the porous oxide semiconductor layer 3 and the electrolyte 5 are sealed between the working electrode 11 and the counter electrode 12 by the sealing material 14. The sealing method may be the same as that in the sealing step according to the first embodiment. Then, the terminal 7 is formed. The terminal 7 may be formed by the same method as that in the terminal forming step according to the first embodiment. The other steps are the same as those in the first embodiment.

In this way, the photoelectric conversion element 140 is obtained.

In the manufacture of the photoelectric conversion element 140, the terminal 7 is formed after the sealing step. However, the terminal 7 may be formed before the sealing step. In this case, even when heat is generated or heat is applied in the terminal forming step, the heat is not transferred to the electrolyte 5, and it is possible to prevent the deterioration of the electrolyte 5 due to heat in the terminal forming step.

Further, in the manufacture of the photoelectric conversion element 140, the formation of the terminal 7 may be performed before the dye supporting step. In this case, even when heat is generated or heat is applied in the terminal forming step, the heat is not transferred to the photo-sensitized dye. Therefore, it is possible to prevent the deterioration of the photo-sensitized dye due to heat in the terminal forming step.

For example, in the fifth and sixth embodiments, the photoelectric conversion element module includes a pair of photoelectric conversion elements. However, the photoelectric conversion element module according to present the invention may include three or more photoelectric conversion elements. In the photoelectric conversion element module including three or more photoelectric conversion elements, when two of the three or more photoelectric conversion elements are connected to each other by the conductive wire, it is possible to easily change the photoelectric conversion elements connected by the conductive wire after the elements are assembled.

In the second embodiment, the terminal 7 is formed on the metal plate 4 of the counter electrode 12 in the opposite side of the working electrode 11. However, the terminal 7 may be formed on the metal plate 4 of the counter electrode 12 facing the working electrode 11. In order to form the terminal 7 on the surface of the metal plate 4 in the working electrode 11 side of the counter electrode 12, in the terminal forming step according to the second embodiment, the terminal 7 may be provided on the working electrode 11 side of the counter electrode 12. At that time, the catalytic layer 6 is formed in the working electrode 11 side of the counter electrode 12. However, in the terminal forming step, when an ultrasonic wave is applied to the metal member, the catalytic layer 6 is destroyed. Therefore, it is possible to form the terminal 7 on the metal plate 4.

The second electrode includes the transparent base 2 and the transparent conductor 1 provided on the transparent base 2. However, the second electrode may include a conductive glass as the transparent conductor.

### Examples

Hereinafter, the content of the present invention will be described specifically with reference to examples and comparative examples, but the present invention is not limited thereto.

### (Example 1)

The following examination was conducted in order to check the bonding strength between a terminal and a metal plate when the terminal was made of a metal member.

A titanium foil with a thickness of 40 µm was prepared as the metal plate. A terminal was formed on a portion of the titanium foil by bonding a metal member made of copper. In this case, pressing was performed such that a pressure of 35 N/mm² was generated between the metal member and the titanium foil. In addition, the metal member was not heated. The vibration frequency of an ultrasonic wave applied to the metal member was set to be 40 kHz.

A lead wire was soldered to the terminal using eutectic solder. The lead wire was made of copper.

### (Example 2)

A terminal was formed and a lead wire was soldered to the terminal in the same way as that in Example 1 except that nickel was used as the material of the metal member,.

### (Comparative example 1)

A copper was coated on the same metal plate as that in Example 1 by a sputtering method to form a film with a thickness of 1 µm. A lead wire was soldered to the film by the same method as that in Example 1.

Then, a tensile force of 10 N was applied to the lead wire in the direction along the titanium foil, and it was measured whether the terminal was peeled off from the titanium foil or not.

As a result, it was found that in Examples 1 and 2 in which the metal member was bonded to the terminal using the ultrasonic wave, even though a force of 10 N or more was applied in the direction along the titanium foil, the terminal was not peeled off from the titanium foil and a sufficient bonding strength was obtained therebetween.

On the other hand, it was found that in Comparative example 1, the film was peeled off from the titanium foil. Therefore, it was found that the adhesive force in the direction along the titanium foil was less than 10 N and therefore, there is room for improving the bonding strength therebetween.

As described above, it was found that it was possible to easily and fixedly form the terminal on the counter electrode, which was constituted by a titanium plate, without using a vacuum apparatus in order to form the terminal.

### (Example 3)

The photoelectric conversion element module shown in Fig. 6 was manufactured.

(Counter electrode) A catalytic layer made of Pt was formed on a titanium foil with a thickness of 40 µm by a sputtering method and the laminate was used as a counter electrode. A terminal was formed on the surface of the counter electrode on which the catalytic layer was not formed. In the formation of the terminal, a copper film with a thickness of 15 µm was used as the metal member. When the terminal was formed, the pressure between the metal member and the counter electrode was set to be 30 N/m² and an ultrasonic wave with a vibration amplitude of 0.5 µm and a vibration frequency of 40 kHz was applied for 0.1 second. In this case, the metal member was bonded at the room temperature.

(Electrolyte) An electrolytic solution composed of an ionic liquid [Hexyl-methylimidazolium iodide] including iodine/iodide ion redox pairs was prepared.

(Working electrode) A transparent base, which was a glass substrate on which a transparent conductor made of FTO was formed, was used, and a slurry aqueous solution having titanium oxide with an average diameter of 20 nm dispersed therein was applied onto the transparent conductor of the transparent base, was dried, and was then heated at a temperature of 450°C for one hour, thereby forming a porous oxide semiconductor film with a thickness of 7 µm. In addition, the porous oxide semiconductor film was dipped in an ethanol solution of N3 dye made of a ruthenium bipyridine complex for one day such that the dye was supported on the porous oxide semiconductor film. In this way, the working electrode in which the porous oxide semiconductor layer was provided on the transparent base 2 was obtained. In addition, a terminal was provided on the working electrode using a silver wire.

The electrolyte was sealed between the counter electrode and the working electrode prepared in this way by the sealing material.

(Photoelectric conversion element module) The terminal formed on the counter electrode of one of the photoelectric conversion elements and the terminal on the working electrode of the other photoelectric conversion element were connected to each other by a conductive adhesive. The conductive adhesive was XA-910 (trade name) manufactured by Fujikura Kasei, Co., Ltd. and the conductive adhesive was applied at the room temperature and then cured at a temperature of 80°C.

### (Example 4)

The photoelectric conversion module shown in Fig. 5 was manufactured. It was similar to Example 3 except that the terminal formed on the counter electrode of one of the photoelectric conversion elements and the terminal formed on the working electrode of the other photoelectric conversion element were connected to each other by a copper wire with a diameter of 0.14 mm.

### (Comparative example 2)

A photoelectric conversion element module was manufactured by the same method as that in Example 3 except that the terminal was provided on the counter electrode without using the ultrasonic wave.

Then, the photoelectric conversion efficiencies of Examples 3 and 4 and Comparative example 2 were measured.

The results are shown in Table 1.

**[Table 1]**

| | Photoelectric conversion efficiency (%) |
|---|---|
| Example 3 | 4.3 |
| Example 4 | 4.2 |
| Comparative example 2 | 2.1 |

As shown in Table 1, the photoelectric conversion efficiencies of Examples 3 and 4 were more excellent than that of Comparative example 2. It is considered that this is because the terminal on the counter electrode of one of the photoelectric conversion elements is fixedly connected to the counter electrode and the electrical connectivity between the counter electrode and the terminal on the counter electrode is good in Examples 3 and 4. Meanwhile, it is considered that the terminal on the counter electrode of one of the photoelectric conversion elements is not fixedly connected to the counter electrode and the electrical resistance between the counter electrode and the terminal on the counter electrode is high in Comparative example 2.

From the above, it was found that it was possible to easily manufacture the photoelectric conversion element module using the photoelectric conversion element having the terminal on the counter electrode and the photoelectric conversion efficiency of the photoelectric conversion element module was good in Examples 3 and 4.

### INDUSTRIAL APPLICABILITY

According to the present invention, provided are a photoelectric conversion element manufacturing method of easily manufacturing a photoelectric conversion element including a terminal strongly bonded to an electrode made of titanium, a photoelectric conversion element manufactured by the method, a method of manufacturing a photoelectric conversion element module, and a photoelectric conversion element module manufactured by the method.

### Description of Letters and Numerals

- 1:: transparent conductor
- 2:: transparent base
- 3, 3a, 3b:: porous oxide semiconductor layer
- 5:: electrolyte
- 7:: terminal
- 8:: terminal
- 9:: conductive wire
- 9a:: conductive adhesive
- 10:: first electrode
- 11:: working electrode
- 12:: counter electrode
- 14:: sealing material
- 20:: second electrode
- 35:: power collection line
- 100, 110, 120, 130, 140:: photoelectric conversion element
- 200, 210:: photoelectric conversion element module

## Claims

1. A method of manufacturing a photoelectric conversion element comprising:
a semiconductor forming step of forming a porous oxide semiconductor layer on a surface of a catalytic layer of a first electrode including a metal plate made of titanium or an alloy including titanium and the catalytic layer, or a surface of a transparent conductor of a second electrode including the transparent conductor;
a dye supporting step of supporting a photo-sensitized dye on the porous oxide semiconductor layer;
a sealing step of surrounding and sealing the porous oxide semiconductor layer and an electrolyte between the first electrode and the second electrode with a sealing material; and
a terminal forming step of forming a terminal on the metal plate in a region other than the region surrounded by the outer circumference of the sealing material in the first electrode,
wherein, in the terminal forming step, the terminal is formed by pressing a metal member including at least one of copper and nickel against the metal plate and applying an ultrasonic wave to the metal member.

2. The method of manufacturing a photoelectric conversion element according to claim 1,
wherein the porous oxide semiconductor layer is formed on the transparent conductor.

3. The method of manufacturing a photoelectric conversion element according to claim 1 or 2,
wherein the first electrode includes an extending portion that extends to the outside of the region surrounded by the outer circumference of the sealing material, when viewing the first electrode from a direction vertical to the surface of the first electrode, and
the terminal is formed in the extending portion.

4. The method of manufacturing a photoelectric conversion element according to claim 1 or 2,
wherein a power collection line made of a metal material is provided on the surface of the second electrode facing the first electrode so as to extend from the region surrounded by the sealing material to the outside of the outer circumference of the sealing material, and
the terminal is formed in the region surrounded by the sealing material on the surface of the first electrode opposite to the second electrode so as to overlap the power collection line, when viewing the first electrode from the direction vertical to the surface of the first electrode.

5. The method of manufacturing a photoelectric conversion element according to claim 1 or 2,
wherein a power collection line made of a metal material is provided on the surface of the second electrode facing the first electrode so as to extend from a region overlapping the sealing material to the outside of the outer circumference of the sealing material, and
the terminal is formed in the region overlapping the sealing material on the surface of the first electrode opposite to the second electrode so as to overlap the power collection line, when viewing the first electrode from the direction vertical to the surface of the first electrode.

6. A method of manufacturing a photoelectric conversion element comprising:
a terminal forming step of forming a terminal on a surface of a metal plate of a first electrode including the metal plate made of titanium or an alloy including titanium and a catalytic layer;
a semiconductor forming step of forming a porous oxide semiconductor layer on a surface of a transparent conductor of a second electrode including the transparent conductor;
a dye supporting step of supporting a photo-sensitized dye on the porous oxide semiconductor layer; and
a sealing step of surrounding and sealing the porous oxide semiconductor layer and an electrolyte between the first electrode and the second electrode facing each other with a sealing material such that the terminal is not surrounded by the sealing material,
wherein, in the terminal forming step, the terminal is formed by pressing a metal member including at least one of copper and nickel against the metal plate and applying an ultrasonic wave to the metal member.

7. A method of manufacturing a photoelectric conversion element comprising:
a semiconductor forming step of forming a porous oxide semiconductor layer on a surface of a catalytic layer of a first electrode including a metal plate made of titanium or an alloy including titanium and the catalytic layer;
a dye supporting step of supporting a photo-sensitized dye on the porous oxide semiconductor layer;
a terminal forming step of forming a terminal on the metal plate in a region in which the porous oxide semiconductor layer is not formed on the surface of the first electrode; and
a sealing step of surrounding and sealing the porous oxide semiconductor layer and an electrolyte between the first electrode and a second electrode including a transparent conductor which face each other with a sealing material such that the terminal is not surrounded by the sealing material,
wherein, in the terminal forming step, the terminal is formed by pressing a metal member including at least one of copper and nickel against the metal plate and applying an ultrasonic wave to the metal member.

8. The method of manufacturing a photoelectric conversion element according to claim 7,
wherein the terminal forming step is performed before the dye supporting step.

9. The method of manufacturing a photoelectric conversion element according to any one of claims 1 to 8,
wherein, in the terminal forming step, the terminal is formed while the metal member is heated.

10. A photoelectric conversion element manufactured by the method of manufacturing a photoelectric conversion element according to any one of claims 1 to 9.

11. A method of manufacturing a photoelectric conversion element module comprising:
a photoelectric conversion element preparing step of preparing a plurality of photoelectric conversion elements manufactured by the method of manufacturing a photoelectric conversion element according to any one of claims 1 to 9; and
a connection step of electrically connecting the terminal formed on the first electrode of at least one of the photoelectric conversion elements and the second electrode of at least another photoelectric conversion element with a conductive member.

12. The method of manufacturing a photoelectric conversion element module according to claim 11,
wherein, in the photoelectric conversion element, the terminal is formed outside a region surrounded by the outer circumference of the sealing material on the surface of the second electrode facing the first electrode, and
the terminal formed on the first electrode of at least one of the photoelectric conversion elements and the terminal formed on the second electrode of at least another photoelectric conversion element are connected to each other by the conductive member.

13. A photoelectric conversion element module manufactured by the method of manufacturing a photoelectric conversion element module according to claim 11 or 12.
